(19) Europäisches Patentamt
European Patent Office
Office européen des brevets

(11) Veröffentlichungsnummer: **0 244 740 B1**

(12) # EUROPÄISCHE PATENTSCHRIFT

(45) Veröffentlichungstag der Patentschrift: **01.07.92**

(51) Int. Cl.$^5$: **C07D 213/85**, C07D 409/12, C07D 417/12, C09B 29/036, C09B 29/34, C09B 29/36

(21) Anmeldenummer: **87106163.6**

(22) Anmeldetag: **28.04.87**

Die Akte enthält technische Angaben, die nach dem Eingang der Anmeldung eingereicht wurden und die nicht in dieser Patentschrift enthalten sind.

(54) **Diaminopyridin-Azofarbstoffe mit Acyloxyresten.**

(30) Priorität: **03.05.86 DE 3615093**

(43) Veröffentlichungstag der Anmeldung: **11.11.87 Patentblatt 87/46**

(45) Bekanntmachung des Hinweises auf die Patenterteilung: **01.07.92 Patentblatt 92/27**

(84) Benannte Vertragsstaaten: **CH DE FR GB IT LI**

(56) Entgegenhaltungen:
**EP-A- 0 135 131**
**DE-A- 2 062 717**
**DE-B- 2 251 702**

(73) Patentinhaber: **BASF Aktiengesellschaft**
**Carl-Bosch-Strasse 38**
**W-6700 Ludwigshafen(DE)**

(72) Erfinder: **Dehnert, Johannes, Dr.**
**Ottweiler Strasse 2**
**W-6700 Ludwigshafen(DE)**
Erfinder: **Lamm, Gunther, Dr.**
**Heinrich-Heine-Strasse7**
**W-6733 Hassloch(DE)**
Erfinder: **Loeffler, Hermann**
**Haydnstrasse 23**
**W-6720 Speyer(DE)**

**EP 0 244 740 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Verbindungen der Formel I

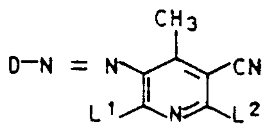

(I),

in der
D für ein Rest der Formel

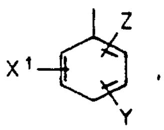

,

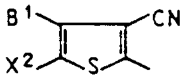

,

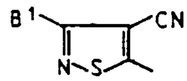

oder

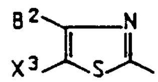

und

einer der beiden Reste $L^1$ und $L^2$ für eine unsubstituierte Aminogruppe und der andere für den Rest

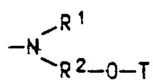

stehen, wobei

- $R^1$ Wasserstoff, $C_1$-C-$_4$-Alkyl, $C_1$-$C_4$-Alkoxy- $C_2$-$C_4$-alkyl oder $C_1$-$C_8$-Acyloxy- $C_2$-$C_4$-alkyl,
- $R^2$ gegebenenfalls durch Sauerstoff unterbrochenes $C_2$-$C_{10}$-Alkylen,
- T gegebenenfalls durch Chlor oder Methoxy substituiertes $C_1$-$C_8$-Alkanoyl,
- $B^1$ $C_1$-$C_4$-Alkyl oder gegebenenfalls durch Methyl, Methoxy oder Chlor substituiertes Benzyl oder Phenyl,
- $B^2$ den Rest $B^1$, Wasserstoff, Halogen, Cyano oder $C_1$-$C_5$-Alkoxycarbonyl,
- $X^1$ Wasserstoff, Nitro, Cyano, $C_1$-$C_9$-Alkoxycarbonyl, $C_1$-$C_9$-Mono- oder Dialkylaminocarbonyl, Trifluormethyl, Methylsulfonyl oder Ethylsulfonyl,
- $X^2$ Nitro oder $C_1$-$C_5$-Alkoxycarbonyl,
- $X^3$ den Rest $X^2$, Cyano oder Formyl
- Y Wasserstoff, Chlor, Brom, Methyl, Methoxy oder Ethoxy und
- Z Wasserstoff, Chlor, Brom, Cyano oder $C_1$-$C_9$-Alkoxycarbonyl, das gegebenenfalls durch $C_1$-$C_4$-Alkoxy substituiert ist, bedeuten, und wobei mindestens einer der Substituenten $X^1$, Y und Z von Wasserstoff verschieden sind.

Aus der EP-A-135 131 ist ein ähnlicher Farbstoff bekannt.

$R^1$, $B^1$ und $B^2$ in Formel I sind beispielsweise Methyl, Ethyl, Propyl, Isopropyl, Butyl, Isobutyl oder sec-Butyl.

$R^1$ kann weiterhin 2-Methoxyethyl, 2-Ethoxyethyl, 2-Methoxypropyl, 3-Methoxypropyl, 4-Methoxybutyl, 2-Formyloxyethyl, 2-Acetyloxyethyl, 2-Propionyloxyethyl, 2-Isobutyryloxyethyl, 2-Hexanoyloxyethyl, 2-Octanoyloxyethyl, 2-(2'-Ethylhexanoyloxy)ethyl, 2- oder 3-Formyloxypropyl, 2- oder 3-Acetyloxypropyl, 2- oder 3-Propionyloxypropyl, 2- oder 3-Isobutyryloxypropyl, 2- oder 3-Hexanoyloxypropyl, 2- oder 3-Octanoyloxypropyl, 2- oder 3-(2' -Ethylhexanoyloxy)propyl, 4-Acetyloxybutyl oder 4-(2' -Ethylhexanoyloxy)butyl bedeuten.

$B^1$ und $B^2$ können weiterhin Benzyl, 2-Methylbenzyl, 4-Methylbenzyl, 2-Methoxybenzyl, 4-Methoxybenzyl, 2,4-Dimethoxybenzyl, 2-Chlorbenzyl, 4-Chlorbenzyl, Phenyl, 2-Methylphenyl, 4-Methylphenyl, 2,4-Dimethylphenyl, 2-Methoxyphenyl, 4-Methoxyphenyl, 2-Chlorphenyl, 4-Chlorphenyl oder 2,6-Dichlorphenyl bedeuten.

Alkylenreste $R^2$ sind beispielsweise:

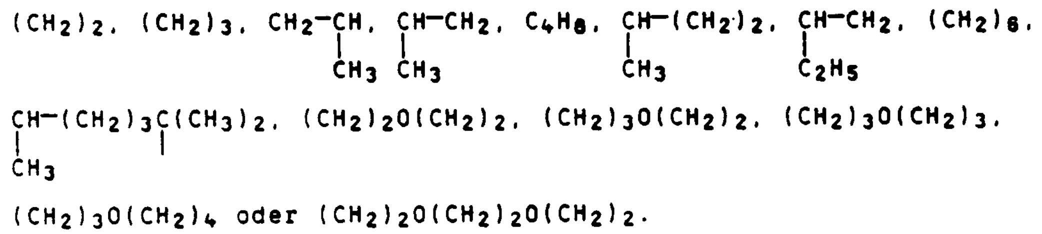

T in Formel I bedeutet beispielsweise Formyl, Acetyl, Propionyl, Isobutyryl, Pentanoyl, 2,2-Dimethylpropanoyl, Hexanoyl, Heptanoyl, Octanoyl, 2-Ethylhexanoyl, Chloracetyl oder Methoxyacetyl.

$B^2$ in Formel I bedeutet beispielsweise Chlor oder Brom.

$B^2$ bedeutet weiterhin, wie auch $X^1$, $X^2$, $X^3$ und Z, z.B. Methoxycarbonyl, Ethoxycarbonyl, Propoxycarbonyl, Isopropoxycarbonyl, Butoxycarbonyl, Isobutoxycarbonyl, sec-Butoxycarbonyl oder Pentyloxycarbonyl.

$X^1$ und Z bedeuten weiterhin z.B. Hexyloxycarbonyl, Heptyloxycarbonyl. Octyloxycarbonyl, 2-Ethylhexyloxycarbonyl oder Nonyloxycarbonyl.

$X^1$ kann außerdem auch z.B. für Methylaminocarbonyl, Ethylaminocarbonyl, Propylaminocarbonyl, Isopropylaminocarbonyl, Butylaminocarbonyl, Isobutylaminocarbonyl, sec-Butylaminocarbonyl, Pentylaminocarbonyl, Hexylaminocarbonyl, Heptylaminocarbonyl, Octylaminocarbonyl, 2-Ethylhexylaminocarbonyl, Nonylaminocarbonyl, Dimethylaminocarbonyl oder Diethylaminocarbonyl stehen.

Z kann außerdem auch z.B. für 2-Methoxyethoxycarbonyl, 2-Ethoxyethoxycarbonyl oder 3-Methoxypropoxycarbonyl stehen.

Zur Herstellung der erfindungsgemäßen Verbindungen der Formel I kann man Kupplungskomponenten der Formel II

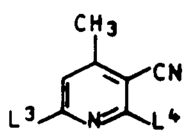

(II),

in der einer der Reste $L^3$ und $L^4$ eine unsubstituierte Aminogruppe und der andere den Rest

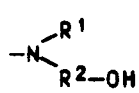

,

in dem $R^1$ und $R^2$ die obengenannte Bedeutung besitzen, bedeuten, in einer überschüssigen organischen Monocarbonsäure der Formel $T^2$-OH, wobei $T^2$ für gegebenenfalls durch Chlor oder Methoxy substituiertes $C_1$-$C_8$-Alkanoyl steht, in Gegenwart einer Mineralsäure oder organischen Sulfonsäure bei einer Temperatur von 0 bis 120 °C, vorzugsweise 20 bis 60 °C und gegebenenfalls unter Eliminierung von Reaktionswasser behandeln und anschließend nach bekannten Verfahren mit Diazoniumsalzen, die sich von Aminen der Formel D-$NH_2$ ableiten, wobei D die obengenannte Bedeutung besitzt, zu Farbstoffen der Formel I kuppeln.

Die Acylierung läßt sich dabei vorteilhaft mit der Herstellung des Hydroxyalkylaminopyridins verbinden, was dessen Zwischenisolierung erspart und den Einsatz an Acylierungsagens minimiert.

Ebenso können auch die Azofarbstoffe der Formel III

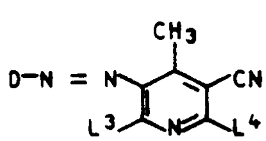

(III),

in der D, $L^3$ und $L^4$ jeweils die obengenannte Bedeutung besitzen, zu den erfindungsgemäßen Farbstoffen der Formel I acyliert werden.

Der Acylierungsgrad kann dabei in Abhängigkeit von der Mineralsäure- oder der Sulfonsäuremenge und dem Wassergehalt der Reaktionsmischung gesteuert werden und erreicht bei Wasserfreiheit 100 %.

Eine vollständige Acylierung ist zur Erzielung optimaler Färbeeigenschaften der resultierenden Farbstoffe meist nicht notwendig. Oftmals gestattet gerade die Wahl des Acylierungsgrades die Optimierung divergierender Färbe- und Echtheitsteigenschaften wie Baderschöpfung, Temperaturabhangigkeit, Aufbauvermögen und Thermofixierechtheit.

Die in der DE-A-2 156 545 und DE-A-2 251 702 beschriebenen Acylierungsverfahren für Aminopyridine, unter Verwendung von Säureanhydriden oder -halogeniden, verschließen jedoch bei den Verbindungen der Formel II auch die unsubstituierte Aminogruppe. Die entsprechenden Acylaminoverbindungen sind jedoch nicht mehr kupplungsfähig, so daß acylierte Farbstoffe der Formel I über diesen Weg nicht oder nur mit erheblichen Ausbeuteverlusten erhältlich sind.

Die neuen Farbstoffe der Formel I eignen sich vorzugsweise zum Färben synthetischer Polyester und zeichnen sich dabei durch ihr hervorragendes färberisches Verhalten bei sehr guten Licht-, Wasch- und Thermofixierechtheiten aus.

Von besonderer Bedeutung sind dabei Farbstoffe der Formel I, in der D für einen Rest der Formel

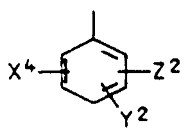 , 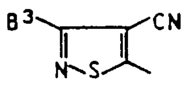 oder 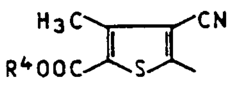 und

einer der beiden Reste $L^1$ und $L^2$ fur eine unsubstituierte Aminogruppe und der andere für den Rest -NH-$R^3$-O-$T^1$ stehen, wobei

- $R^3$ $(CH_2)_2O(CH_2)_2$, $(CH_2)_3O(CH_2)_3$ oder $(CH_2)_3O(CH_2)_4$,
- $T^1$ $C_1$-$C_4$-Alkanoyl,
- $X^4$ Nitro, Cyano, Methylsulfonyl oder Ethylsulfonyl,
- $Y^2$ Wasserstoff, Chlor oder Brom,
- $Z^2$ Wasserstoff, Cyano oder $C_1$-$C_5$-Alkoxycarbonyl,
- $B^3$ $C_1$-$C_3$-Alkyl, Benzyl oder Phenyl und
- $R^4$ Methyl oder Ethyl bedeuten.

Vorteilhaft sind auch Mischungen von solchen erfindungsgemäßen Verbindungen der Formel I, in denen einer der beiden Reste $L^1$ und $L^2$ eine unsubstituierte Aminogruppe und der andere den Rest -NH-$R^3$-O-$T^3$ bedeuten, wobei $R^3$ die obengenannte Bedeutung besitzt und $T^3$ für $C_1$-$C_4$-Alkanoyl steht, mit solchen Farbstoffen der Formel I, in denen einer der beiden Reste $L^1$ und $L^2$ eine unsubstituierte Aminogruppe und der andere den Rest -NH-$R^3$-OH bedeutet, wobei $R^3$ die obengenannte Bedeutung besitzt.

Solche Mischungen enthalten beispielsweise Einzelkomponenten, die der Formel IV

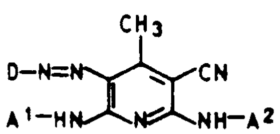 (IV)

entsprechen, in der D die obengenannte Bedeutung besitzt. In den Einzelkomponenten IVa bis IVd haben die Reste $A^1$ und $A^2$ die folgende Bedeutung:

| | |
|---|---|
| IVa: $A^1$ = Wasserstoff<br>$A^2$ = $R^3$-OH | IVb: $A^1$ = $R^3$-OH<br>$A^2$ = Wasserstoff |
| IVc: $A^1$ = Wasserstoff<br>$A^2$ = $R^3$-OT$^3$ | IVd: $A^1$ = $R^3$-OT$^3$<br>$A^2$ = Wasserstoff. |

Solche Mischungen entstehen beispielsweise, wenn man 2,6-Dichlor-3-cyano-4-methylpyridin zunächst mit Ammoniak und anschließend mit einem entsprechenden Alkanolamin umsetzt, danach acyliert und anschließend die Kupplungsreaktion durchführt. Wie oben bereits ausgeführt, ist der Acylierungsgrad, d.h. das Molverhältnis IVa:IVc und IVb:IVd, von den Reaktionsbedingungen abhängig.

Die Isomerenverhältnisse IVa:IVb und IVc:IVd sind darüberhinaus von der Kupplungsaktivität der Diazokomponente und dem Einsatzverhältnis der Kupplungskomponente abhängig und können in weiten Bereichen schwanken. Bevorzugt ist ein Isomerenverhältnis von IVa:IVb und IVc:IVd = 3:2 bis 3:1.

Weitere Einzelheiten der Herstellung können den Beispielen entnommen werden, in denen sich Angaben über Teile und Prozente, sofern nicht anders vermerkt, auf das Gewicht beziehen.

Die $\lambda_{max}$-Werte wurden jeweils in Aceton gemessen.

Beispiel 1

13,8 Teile 4-Nitroanilin wurden mit 30 Volumenteilen 30 %iger Salzsäure in 200 Volumenteilen heißem Wasser gelöst. Die noch warme Lösung goß man auf 300 Teile Eis und fügte rasch 30 Volumenteile 3,33 normale Natriumnitritlösung hinzu. Man rührte etwa 15 Minuten in Gegenwart eines Überschusses an salpetriger Säure nach und zerstörte dann diesen Überschuß mit wenig Amidosulfonsäure. Die erhaltene Diazoniumsalz-Lösung ließ man dann zur Lösung der Kupplungskomponente fließen, die wie folgt bereitet wurde:

Ein Gemisch aus 17 Teilen 2-Chlor-3-cyano-4-methyl-6-aminopyridin, 20 Volumenteilen Isobutanol, 18 Teilen 3-Aminopropyl-4-hydroxybutylether und 8 Teilen Soda wurde am absteigenden Kühler unter guter Rührung 5 Stunden auf 145/150 °C erhitzt, bis ein Dünnschichtchromatogramm vollständige Umsetzung anzeigte. Nach dem Abkühlen auf ungefähr 100 °C wurden dann 35 Teile Essigsäure und bei 35/40 °C unter weiterer leichter Kühlung 15 Teile 96 %ige Schwefelsäure zugetropft. Nach dreistündigem Rühren bei einem Druck von 45 mmHg waren 96 % der Hydroxyverbindung acetyliert.

Zur Kupplung wurde das Reaktionsgemisch mit 300 Teilen Eis und 100 Volumenteilen Wasser verdünnt. Durch langsame Zugabe von 100 Volumenteilen gesättigter Natriumacetatlösung (pH-Wert des Reaktionsgemisches ca. 2) und etwa einstündiges Rühren bei ca. +5 °C reagiert das Diazoniumsalz ab. Danach wurde das Reaktionsgemisch abgesaugt, das Filtergut neutral gewaschen und bei 80 °C getrocknet.

Das erhaltene braunrote Pulver entspricht zu ca. 92 % dem Isomerengemisch der Formel

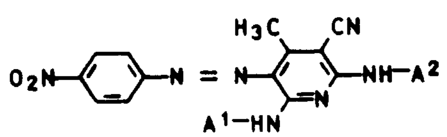

$\lambda_{max}$ = 465 nm

1) $A^1$ = H
$A^2$ = $C_3H_6-O-C_4H_8-O-COCH_3$

2) $A^1$ = $C_3H_6-O-C_4H_8-O-COCH_3$
$A^2$ = H

und enthält noch etwa 8 % der nicht acetylierten Hydroxyverbindungen.

Es färbte PES-Gewebe nach dem Hochtemperaturverfahren mit sehr hoher Farbstärke, wobei das Färbebad bereits bei 125/130 °C vollständig ausgezogen wurde. Die Färbung zeigte ausgezeichnete Gebrauchsechtheiten.

Beispiel 2

17,3 Teile 2-Chlor-4-nitranilin wurden mit 40 Volumenteilen 30 %iger Salzsäure in 120 Teilen Wasser eine Stunde verrührt. Man stellte mit Wasser und Eis ein Volumen von 500 Teilen und eine Temperatur von 10 °C ein und gab dann unter die Oberfläche 30 Volumenteile einer 3,33n Natriumnitritlösung zu. Nach zweistündigem Rühren bei 10 °C und überschüssiger Säure wurden zur Diazoniumsalzlösung zunächst 250 Teile Eis gegeben. Dazu goß man die Lösung der Kupplungskomponente, die analog dem Verfahren des Beispiels 1 hergestellt jedoch mit 40 Teilen Propionsäure anstatt Essigsäure acyliert wurde. (Der Wassergehalt des Acetylierungsgemisches betrug 10 %).

Nach zweistündigem Rühren bei 5 bis 10 °C war das Diazoniumsalz verbraucht. Man saugte danach kalt ab, wusch das Filtergut neutral und trocknete bei 80 °C.

Das erhaltene rotbraune Pulver entspricht zu ca. 75 % dem Isomerengemisch

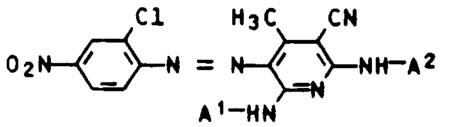

$\lambda_{max}$ = 483 nm

1) $A^1$ = H
$A^2$ = $C_3H_6-O-C_4H_8-O-COC_2H_5$

2) $A^1$ = $C_3H_6-O-C_4H_8-O-COC_2H_5$
$A^2$ = H

und enthält noch etwa 25 % der unacylierten Hydroxyisomeren.

Der Farbstoff ergab auf PES nach dem Hochtemperaturverfahren bei 125/130 °C gefärbt, sehr farbstarke rotorange Färbungen mit sehr guten Gebrauchsechtheiten.

Beispiel 3

16,3 Teile 2-Cyano-4-nitranilin wurden in 150 Volumenteilen Eisessig und 50 Volumenteilen Propionsäure bei 10/15 °C angerührt. Dazu tropfte man 31,5 Teile einer 40 %igen Nitrosylschwefelsäure und rührte zwei Stunden bei 10/15 °C nach, bis vollständige Lösung eingetreten war. Die Lösung ließ man zu einer Kupplungskomponentenlösung einlaufen, die aus 250 Teilen Eis und der mit 40 Teilen Isobuttersäure acylierten Komponente des Beispiels 1 bereitet wurde. Das Acylierungsgemisch enthielt 2 % Wasser.

Die Kupplungsreaktion war nach kurzer Zeit beendet. Man saugte den Farbstoff ab, wusch neutral und trocknete bei 80 °C.

Das erhaltene rote Pulver entspricht zu ca. 85 % dem Gemisch der Acylisomeren.

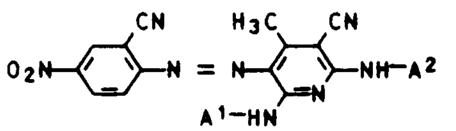

$\lambda_{max}$ = 500 nm

1) $A^1$ = H
$A^2$ = $C_3H_6-O-C_4H_8-O-COCH(CH_3)_2$

2) $A^1$ = $C_3H_6-O-C_4H_8-O-COCH(CH_3)_2$
$A^2$ = H

und färbte PES in Scharlachtönen mit sehr hohen Echtheiten.

Nach den Vorschriften der Beispiele 1 bis 3 können, gegebenenfalls bei geringfügiger Variation von Konzentration, Temperatur und Lösungsmittel, die in den folgenden Tabellen dargestellten Farbstoffe erhalten werden, die färberisch und echtheitsmäßig vergleichbar günstige Ergebnisse liefern.

Bei den nachstehend durch die Substituenten gekennzeichneten Farbstoffen ist jeweils nur das Hauptisomere angegeben. Es liegen jedoch immer die Isomerengemische, die sowohl vollständig oder auch nur teilacyliert sein können, wie sie bei der beschriebenen Herstellungsweise entstehen, vor.

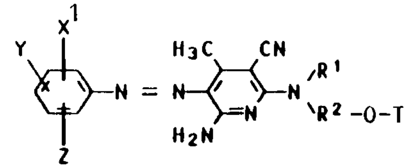

| Bsp.-Nr. | $X^1$ | Y | Z | $R^1$ | $R^2-O-T$ | λ max nm |
|---|---|---|---|---|---|---|
| 4 | $4-NO_2$ | H | H | H | $C_3H_6-O-C_4H_8-O-COC_2H_5$ | 465 |
| 5 | $4-NO_2$ | 2-Cl | H | H | $C_3H_6-O-C_4H_8-O-COCH_3$ | 483 |
| 6 | $4-NO_2$ | H | 2-CN | H | $C_3H_6-O-C_4H_8-O-COC_2H_5$ | 500 |
| 7 | $4-NO_2$ | 2-Cl | 6-CN | H | $C_3H_6-O-C_4H_8-O-COCH_3$ | 507 |
| 8 | $4-NO_2$ | 2-Cl | 6-CN | H | $C_3H_6-O-C_4H_8-O-COH$ | 507 |
| 9 | $4-NO_2$ | 2-Cl | 6-CN | H | $C_2H_4-O-C_2H_4-O-COCH_3$ | 506 |
| 10 | $4-SO_2CH_3$ | 2-Cl | H | H | $C_3H_6-O-C_4H_8-O-COCH_3$ | 453 |
| 11 | $4-NO_2$ | H | $2-COOC_2H_4OCH_3$ | H | $C_3H_6-O-COC_2H_5$ | 480 |
| 12 | 4-CN | 2-Cl | H | H | $C_3H_6-O-C_4H_8-O-COCH_3$ | 457 |
| 13 | 4-Cl | H | 2-CN | H | $C_3H_6-O-C_4H_8-O-COCH_3$ | 453 |
| 14 | $4-NO_2$ | H | H | $C_4H_9$ | $C_2H_4-O-COCH_3$ | 473,5 |
| 15 | $4-NO_2$ | H | H | $C_2H_4OCH_3$ | $C_2H_4-O-COC_2H_5$ | 473 |
| 16 | $4-NO_2$ | 2-Cl | H | $C_2H_4OCOC_2H_5$ | $C_2H_4-O-COC_2H_5$ | 491* |
| 17 | $4-NO_2$ | H | 6-CN | $C_2H_5$ | $C_2H_4-O-COCH(CH_3)_2$ | 508 |
| 18 | $4-NO_2$ | H | H | H | $C_2H_5$<br>$C_2H_4-O-COCH-C_4H_9$ | 463 |

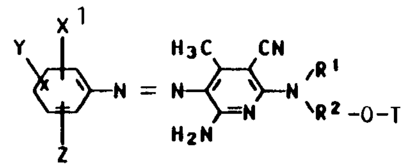

| Bsp.-Nr. | $X^1$ | Y | Z | $R^1$ | $R^2-O-T$ | λ max nm |
|---|---|---|---|---|---|---|
| 19 | $4-NO_2$ | 2-Cl | H | H | $C_3H_6-O-COCH(C_2H_5)-C_4H_9$ | 484 |
| 20 | $4-NO_2$ | 2-Cl | H | H | $C_6H_{12}-O-COCH_3$ | 484 |
| 21 | 2-CN | H | H | H | $C_3H_6-O-C_4H_8-O-COCH_3$ | 440 |
| 22 | $4-NO_2$ | $2-SO_2C_2H_5$ | H | H | $C_3H_6-O-C_4H_8-O-COCH_3$ | 501 |
| 23 | $4-NO_2$ | 2-Cl | H | H | $CH_2-CH(CH_3)-O-COCH(CH_3)_2$ | 482 |
| 24 | $4-NO_2$ | H | 6-CN | H | $C_3H_6-O-COCH_2OCH_3$ | 501 |
| 25 | $4-NO_2$ | H | 6-CN | $C_4H_9$ | $C_2H_4-O-COC_2H_5$ | 508,5 |
| 26 | $4-NO_2$ | 2-Cl | 6-CN | $C_2H_4OCH_3$ | $C_2H_4-O-COC_2H_5$ | 514 |
| 27 | $4-NO_2$ | H | H | H | $CH(CH_3)-C_2H_4-O-COC_2H_5$ | 464 |
| 28 | $4-NO_2$ | H | H | H | $CH(C_2H_5)-CH_2-O-COC_2H_5$ | 463 |
| 29 | $4-NO_2$ | 2-Cl | H | H | $CH(C_2H_5)-CH_2-O-COC_2H_5$ | 482 |

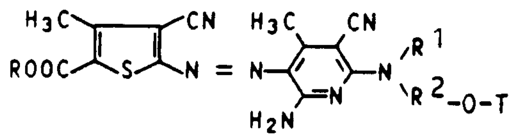

| Bsp.-Nr. | R | $R^1$ | $R^2$-C-T | λ max nm |
|---|---|---|---|---|
| 30 | $CH_3$ | H | $C_3H_6-O-C_4H_8-O-COCH_3$ | 516,5 |
| 31 | $CH_3$ | H | $C_3H_6-O-C_4H_8-O-COC_2H_5$ | 516,5 |
| 32 | $CH_3$ | H | $C_3H_6-O-C_4H_8-O-COCH(CH_3)_2$ | 516,5 |
| 33 | $CH_3$ | H | $C_3H_6-O-CO-CH\begin{matrix}/C_2H_5\\ \backslash C_4H_9\end{matrix}$ | 518 |
| 34 | $C_2H_5$ | H | $C_3H_6-O-C_4H_8-O-COC_2H_5$ | 516,5 |
| 35 | $C_4H_9$ | H | $C_3H_6-O-C_4H_8-O-COCH_3$ | 517 |
| 36 | $CH_3$ | $C_4H_9$ | $C_2H_4-O-COCH_3$ | 525 |
| 37 | $CH_3$ | $C_2H_4OCH_3$ | $C_2H_4-O-COC_2H_5$ | 524 |
| 38 | $C_4H_9$ | $C_4H_9$ | $C_2H_4-O-CHO$ | 525 |
| 39 | $CH_3$ | H | $CH-C_2H_4-O-COCH_3$<br>\|<br>$CH_3$ | 516 |
| 40 | $CH_3$ | H | $CH-CH_2-O-COCH_3$<br>\|<br>$C_2H_5$ | 515 |

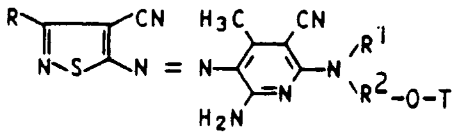

| Bsp.-Nr. | R | $R^1$ | $R^2-O-T$ | λ max nm [1] |
|---|---|---|---|---|
| 41 | $CH_3$ | H | $C_3H_6-O-C_4H_8-O-COCH(CH_3)_2$ | 506 |
| 42 | $CH_3$ | H | $C_3H_6-O-COCH\genfrac{}{}{0pt}{}{C_2H_5}{C_4H_9}$ | 507 |
| 43 | $CH(CH_3)_2$ | H | $C_3H_6-O-C_4H_8-O-COCH_3$ | 506 |
| 44 | $CH_2$— 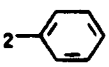 | H | $C_3H_6-O-C_4H_8-O-COCH_3$ | 509 |
| 45 | $CH_2$— 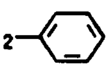 | H | $C_3H_6-O-COC_2H_5$ | 510 |
| 46 | $CH_3$ | $C_4H_9$ | $C_2H_4-O-COCH_3$ | 522 |
| 47 | $CH_2$— 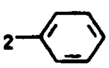 | $C_4H_9$ | $C_2H_4-O-COCH_3$ | 525 |
| 48 | $CH_2$— 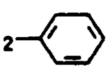 | $C_4H_9$ | $\underset{CH_3}{CH}-C_2H_4-O-COCH_3$ | 510 |

[1] in DMF/Essigsäure 9:1

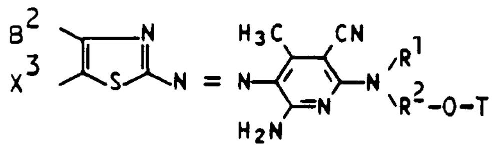

| Bsp.-Nr. | $B^2$ | $X^3$ | $R^1$ | $R^2-O-T$ | λ max nm |
|---|---|---|---|---|---|
| 49 | 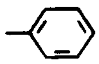 | CN | H | $C_3H_6-O-C_4H_8-O-COCH_3$ | 500 |
| 50 | 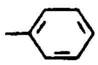 | CN | H | $CH(CH_3)C_2H_4-O-COCH_3$ | 501 |
| 51 | 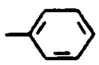 | CN | H | $C_3H_6-O-COC_2H_5$ | 501 |
| 52 | $COOC_2H_5$ | $COOC_2H_5$ | H | $C_3H_6-O-C_4H_8-O-COC_2H_5$ | 493 |
| 53 | $COOC_2H_5$ | $COOC_2H_5$ | H | $C_3H_6-O-COCH\begin{smallmatrix}/C_2H_5\\ \backslash C_4H_9\end{smallmatrix}$ | 494 |
| 54 | 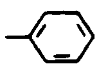 | CN | $C_2H_5$ | $C_2H_4-O-COCH_3$ | 508 |
| 55 | $COOC_2H_5$ | $COOC_2H_5$ | $C_4H_9$ | $C_2H_4-O-COCH_3$ | 501,5 |
| 56 | $COOC_2H_5$ | CN | $C_4H_9$ | $C_2H_4-O-COCH_3$ | 508,5 |
| 57 | $COOC_2H_5$ | CN | H | $C_3H_6-O-COCH\begin{smallmatrix}/C_2H_5\\ \backslash C_4H_9\end{smallmatrix}$ | 500 |
| 58 | H | $NO_2$ | H | $C_3H_6-O-COCH\begin{smallmatrix}/C_2H_5\\ \backslash C_4H_9\end{smallmatrix}$ | 518 |
| 59 | Cl | CHO | H | $C_3H_6-O-COCH\begin{smallmatrix}/C_2H_5\\ \backslash C_4H_9\end{smallmatrix}$ | 517 |
| 60 | $CH_3$ | $COOC_2H_5$ | H | $C_3H_6-O-COCH\begin{smallmatrix}/C_2H_5\\ \backslash C_4H_9\end{smallmatrix}$ | 493 |
| 61 | $CH_3$ | $COOCH_3$ | H | $C_3H_6-O-COCH\begin{smallmatrix}/C_2H_5\\ \backslash C_4H_9\end{smallmatrix}$ | 497 |
| 62 | CN | $COOCH_3$ | H | $C_3H_6-O-COCH\begin{smallmatrix}/C_2H_5\\ \backslash C_4H_9\end{smallmatrix}$ | 508 |

## Patentansprüche

**1.** Verbindungen der Formel I

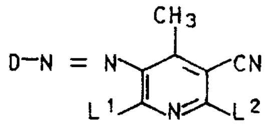

(I),

in der

D für einen Rest der Formel

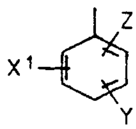, 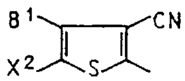, 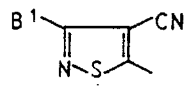 oder 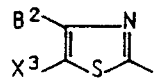 und

einer der beiden Reste $L^1$ und $L^2$ für eine unsubstituierte Aminogruppe und der andere für den Rest

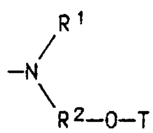

stehen, wobei

- $R^1$ Wasserstoff, $C_1$-$C_4$-Alkyl, $C_1$-$C_4$-Alkoxy- $C_2$-$C_4$-alkyl oder $C_1$-$C_8$-Acyloxy- $C_2$-$C_4$-alkyl,
- $R^2$ gegebenenfalls durch Sauerstoff unterbrochenes $C_2$-$C_{10}$-Alkylen,
- T gegebenenfalls durch Chlor oder Methoxy substituiertes $C_1$-$C_8$-Alkanoyl,
- $B^1$ $C_1$-$C_4$-Alkyl oder gegebenenfalls durch Methyl, Methoxy oder Chlor substituiertes Benzyl oder Phenyl,
- $B^2$ den Rest $B^1$, Wasserstoff, Halogen, Cyano oder $C_1$-$C_5$-Alkoxycarbonyl,
- $X^1$ Wasserstoff, Nitro, Cyano, $C_1$-$C_9$-Alkoxycarbonyl, $C_1$-$C_9$-Mono- oder Dialkylaminocarbonyl, Trifluormethyl, Methylsulfonyl oder Ethylsulfonyl,
- $X^2$ Nitro oder $C_1$-$C_5$-Alkoxycarbonyl,
- $X^3$ den Rest $X^2$, Cyano oder Formyl,
- Y Wasserstoff, Chlor, Brom, Methyl, Methoxy oder Ethoxy und
- Z Wasserstoff, Chlor, Brom, Cyano oder $C_1$-$C_9$-Alkoxycarbonyl, das gegebenenfalls durch $C_1$-$C_4$-Alkoxy substituiert ist, bedeuten, und wobei mindestens einer der Substituenten $X^1$, Y und Z von Wasserstoff verschieden ist.

**2.** Verbindungen gemäß Anspruch 1, dadurch gekennzeichnet, daß
D für einen Rest der Formel

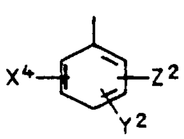, 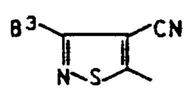 oder 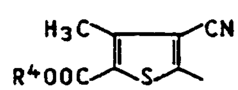 und

der der beiden Reste $L^1$ und $L^2$ für eine unsubstituierte Aminogruppe und der andere für den Rest -NH-$R^3$-O-$T^1$ stehen, wobei

- $R^3$ $(CH_2)$-O-$(CH_2)_2$, $(CH_2)_3O(CH_2)_3$ oder $(CH_2)_3O(CH_2)_4$,
- $T^1$ $C_1$-$C_4$-Alkanoyl,
- $X^4$ Nitro, Cyano, Methylsulfonyl oder Ethylsulfonyl,
- $Y^2$ Wasserstoff, Chlor oder Brom,
- $Z^2$ Wasserstoff, Cyano oder $C_1$-$C_5$-Alkoxycarbonyl,
- $B^3$ $C_1$-$C_3$-Alkyl, Benzyl oder Phenyl und
- $R^4$ Methyl oder Ethyl bedeuten.

3. Verwendung der Verbindungen gemäß Anspruch 1 zum Färben synthetischer Polyester.

**Claims**

1. A compound of the formula I

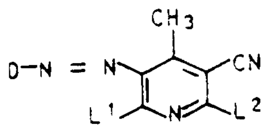

(I)

where
D is a radical of the formula

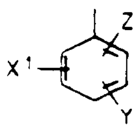 , 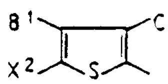 , 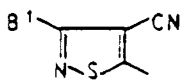 or 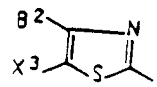 and

one of the two radicals $L^1$ and $L^2$ is unsubstituted amino and the other the radical

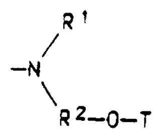

where
- $R^1$ is hydrogen, $C_1$-$C_4$-alkyl, $C_1$-$C_4$-alkoxy-$C_2$-$C_4$-alkyl or $C_1$-$C_8$-acyloxy-$C_2$-$C_4$-alkyl,
- $R^2$ is $C_2$-$C_{10}$-alkylene which may be interrupted by oxygen,
- T is $C_1$-$C_8$-alkanoyl which may be substituted by chlorine or methoxy,
- $B^1$ is $C_1$-$C_4$-alkyl or benzyl or phenyl, which may each be substituted by methyl, methoxy or chlorine,
- $B^2$ is $B^1$, hydrogen, halogen, cyano or $C_1$-$C_5$-alkoxy-carbonyl,
- $X^1$ is hydrogen, nitro, cyano, $C_1$-$C_9$-alkoxycarbonyl, $C_1$-$C_9$-mono- or -dialkylaminocarbonyl, trifluoromethyl, methylsulfonyl or ethylsulfonyl,
- $X^2$ is nitro or $C_1$-$C_5$-alkoxycarbonyl,
- $X^3$ is $X^2$, cyano or formyl,
- Y is hydrogen, chlorine, bromine, methyl, methoxy or ethoxy and
- Z is hydrogen, chlorine, bromine, cyano or $C_1$-$C_9$-alkoxycarbonyl which may be substituted by $C_1$-$C_4$-alkoxy, and one or more of the substituents $X^1$, Y and Z is different from hydrogen.

2. A compound as claimed in claim 1, wherein
D is a radical of the formula

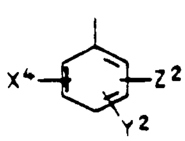 , 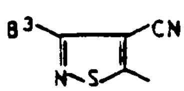 or 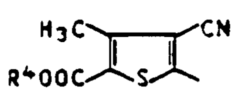 and

the one of the two radicals $L^1$ and $L^2$ is unsubstituted amino and the other is -NH-$R^3$-O-$T^1$, where
- $R^3$ is $(CH_2)$-O-$(CH_2)_2$, $(CH_2)_3O(CH_2)_3$ or $(CH_2)_3O(CH_2)_4$,
- $T^1$ is $C_1$-$C_4$-alkanoyl,
- $X^4$ is nitro, cyano, methylsulfonyl or ethylsulfonyl,
- $Y^2$ is hydrogen, chlorine or bromine,

$Z^2$ is hydrogen, cyano or $C_1$-$C_5$-alkoxycarbonyl,
$B^3$ is $C_1$-$C_3$-alkyl, benzyl or phenyl and
$R^4$ is methyl or ethyl.

**3.** The use of a compound as claimed in claim 1 for dyeing synthetic polyester.

**Revendications**

**1.** Composés de formule I

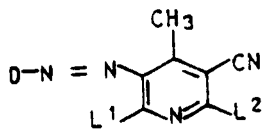

(I),

dans laquelle
D est mis pour un reste de formule

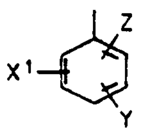
,
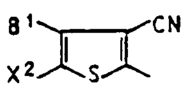
,
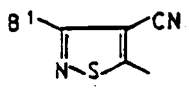
ou
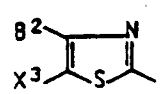

l'un des deux restes $L^1$ et $L^2$ est un groupement amino non substitué et l'autre est mis pour le reste

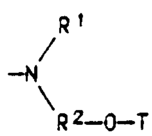

où
$R^1$ représente un atome d'hydrogène, un radical alkyle en $C_1$-$C_4$, (alcoxy en $C_1$-$C_4$)alkyle en $C_2$-$C_4$ ou (acyloxy en $C_1$-$C_8$)alkyle en $C_2$-$C_4$
$R^2$ représente un radical alkylène en $C_2$-$C_{10}$ éventuellement interrompu par un atome d'oxygène,
T représente un reste alcanoyle en $C_1$-$C_8$ éventuellement substitué par un atome de chlore ou un groupement méthoxy,
$B^1$ représente un reste alkyle en $C_1$-$C_4$ ou un reste benzyle ou phényle éventuellement substitué par un groupement méthyle, méthoxy ou par un atome de chlore,
$B^2$ représente le reste $B^1$, un atome d'hydrogène, ou d'halogène, ou un groupement cyano ou (alcoxy en $C_1$-$C_5$)carbonyle,
$X^1$ représente un atome d'hydrogène, un reste nitro, cyano, (alcoxy en $C_1$-$C_9$)carbonyle, mono- ou di(alkyl en $C_1$-$C_9$)aminocarbonyle, trifluorométhyle, méthylsulfonyle ou éthylsulfonyle,
$X^2$ représente un reste nitro ou (alcoxy en $C_1$-$C_5$)carbonyle,
$X^3$ représente le reste $X^2$, cyano ouformyle,
Y représente un atome d'hydrogène, de chlore, de brome, un groupement méthyle, méthoxy ou éthoxy et
Z représente un atome d'hydrogène, de chlore, de brome, un groupement cyano ou (alcoxy en $C_1$-$C_9$)carbonyle qui est éventuellement substitué par un reste alcoxy en $C_1$-$C_4$
l'un au moins des substituants $X^1$, Y et Z étant différents de l'hydrogène.

**2.** Composés selon la revendication 1, caractérisés en ce que
D est mis pour un reste de formule

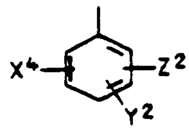 , 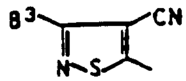 ou 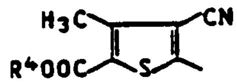 .

l'un des deux restes $L^1$ et $L^2$ est un groupement amino non substitué et l'autre est mis pour le reste

$-NH-R^3-O-T^1$

où

- $R^3$ représente $(CH_2)O(CH_2)_2$, $(CH_2)_3O(CH_2)_3$ ou $(CH_2)_3O(CH_2)_4$,
- $T^1$ représente un reste alcanoyle en $C_1$-$C_4$,
- $X^4$ représente un reste nitro, cyano, méthylsulfonyle ou éthylsulfonyle,
- $Y^2$ représente un atome d'hydrogène, de chlore ou de brome,
- $Z^2$ représente un atome d'hydrogène, ou un reste cyano au (alcoxy en $C_1$-$C_5$)carbonyle,
- $B^3$ représente un reste alkyle en $C_1$-$C_3$, benzyle ou phényle et
- $R^4$ représente un reste méthyle ou éthyle.

**3.** Utilisation des composés selon la revendication 1 pour la teinture de polyesters synthétiques.